# EUROPÄISCHE PATENTSCHRIFT

(11) **EP 3 724 360 B1**
(45) Veröffentlichungstag und Bekanntmachung des Hinweises auf die Patenterteilung: **06.09.2023**
(21) Anmeldenummer: 18812037.2
(22) Anmeldetag: 13.11.2018
(51) Int. Cl.: C21D 9/28, C21D 9/30, C21D 9/52, C21D 1/10, C21D 1/18, C21D 1/42

(54) **INDUKTOR UND VERFAHREN ZUM HÄRTEN VON ZAHNSTANGEN**
INDUCTOR AND METHOD FOR HARDENING RACK GEARS
INDUCTEUR ET PROCÉDÉ POUR DURCIR DES CRÉMAILLÈRES

(30) Priorität: 15.12.2017 DE 102017011620
(43) Veröffentlichungstag der Anmeldung: 21.10.2020
(73) Patentinhaber: Idea GmbH, 72285 Pfalzgrafenweiler-Bösingen (DE); ITP GmbH, 77704 Oberkirch (DE)
(72) Erfinder: HÄUßLER, Andreas, 72250 Freudenstadt (DE)
(74) Vertreter: Suchy, Ulrich Johannes
(86) Internationale Anmeldenummer: PCT/DE2018/000331
(87) Internationale Veröffentlichungsnummer: WO 2019/114848

(56) Entgegenhaltungen:
- EP-B1- 2 135 485
- DE-C1- 3 909 117
- JP-A- S54 107 812
- JP-A- 2010 108 730
- US-A- 5 428 208
- US-A- 5 473 960

## Beschreibung

Die Erfindung betrifft einen Induktor zur induktiven Härtung von stabförmigen Werkstücken, insbesondere von Zahnstangen, mit den Merkmalen des Oberbegriffs des Anspruchs 1, sowie ein Verfahren unter Verwendung eines derartigen Induktors nach Anspruch 11.

Als Teil von Lenkungen werden in hohen Stückzahlen Zahnstangen hergestellt. Diese sollen im Bereich der Zähne und auch an der gegenüberliegenden Seite, an der sie gelagert werden, hart sein, gleichzeitig aber einen zähen Kern aufweisen. Sie werden daher vielfach induktiv gehärtet, wobei sich zwei Verfahrenstypen herausgebildet haben: Entweder der Induktor steht im Wesentlichen starr zur Zahnstange und es wird mit hoher Leistung gleichzeitig über die gesamte Länge gehärtet, oder der Induktor wird relativ zum Werkstück bewegt und erhitzt dadurch sukzessive das Werkstück. Dieser zweite Verfahrenstyp wird als "Vorschubhärten" oder auch "Scanning" bezeichnet. Das Vorschubhärten hat zum einen den Vorteil, dass mit wesentlich niedrigeren Leistungen gehärtet werden kann, was den apparativen Aufwand verringert. Zum anderen kann durch das Verfahren das Härtebild, also insbesondere die geometrische Ausbildung der Härtezone, besser gesteuert werden.

Aus der Druckschrift EP 2 653 571 A2 ist ein Induktor für das Vorschubhärten bekannt mit einer ringförmigen Induktionsspule, mit der das Werkstück schleifenartig umfasst werden kann. Der Induktor ist relativ flach, wodurch jeweils nur ein kurzer axialer Abschnitt des Werkstücks, also insbesondere einer Zahnstange, erhitzt wird. Die Induktionsspule wird von einem Leiter gebildet, der in einer Draufsicht steigbügelförmig ist, wobei ein gerader Abschnitt der Steigbügelform gegenüber den beiden Anschlüssen des Leiters nahe der Zahnung der Zahnstange geführt wird. Durch diese Geometrie wird ein Wirbelstrom in der Zahnstange induziert, der im Wesentlichen ringförmig am Umfang der Zahnstange fließt. Zur Verbesserung des Härtebilds schlägt die Druckschrift vor, dass der in Draufsicht gerade Abschnitt in einer Seitenansicht Z- oder S-förmig ausgebildet ist, wodurch es einen Teilabschnitt gibt, der parallel zur Längserstreckung der Zahnstange beziehungsweise senkrecht zu den Zahnflanken steht. Hierdurch soll erreicht werden, dass ein entsprechend orientiertes Magnetfeld und damit entsprechende Wirbelstromanteile induziert werden.

DE-C 39 09 117 betrifft eine Indultionshärteanlage für langgestreckte Werkstücke, wie Achswellen, Gelenkwellen usw., die Mittel zum Umlauf-Vorschubhärten mit Induktorschleifen und Mittel zum Drehen des Werkstücks aufweisen, wobei gerade- oder schräggestellte ein- oder mehrwindige umfassende Induktoren, Induktoren mit Etagenform oder Halbschalen-Induktoren vorgesehen sind.

Der Erfindung liegt die Aufgabe zugrunde, einen Induktor und ein Härteverfahren mit einem Induktor zu schaffen, mit dem insbesondere Zahnstangen noch besser gehärtet werden können.

Diese Aufgabe wird erfindungsgemäß durch den Induktor mit den Merkmalen des Anspruchs 1 sowie durch das Verfahren mit den Merkmalen des Anspruchs 11 gelöst. Der Induktor dient der induktiven Härtung von stabförmigen Werkstücken, insbesondere von Zahnstangen. Das erfindungsgemäße Verfahren zum Härten erfolgt mit dem erfindungsgemäßen Induktor, wobei der Induktor das Werkstück umfasst und zum Vorschubhärten längs des Werkstücks verfahren wird. Mit "längs des Werkstücks verfahren" ist eine Relativbewegung zwischen Induktor und Werkstück gemeint. Es kommt also nicht darauf an, ob sich der Induktor, das Werkstück oder beide bewegen, solange sie sich relativ zueinander bewegen. Dabei erzeugt der Induktor jeweils lokal über Induktion einen Wirbelstrom im Werkstück, so dass dieses sukzessive erhitzt wird.

Um das Werkstück zu umfassen, weist der Induktor eine ringförmige Induktionsspule auf.

Mit "umfassen" ist ein im Wesentlichen vollständiges Umgreifen über den gesamten Umfang gemeint, wobei kleinere Lücken im Bereich von unter 10 mm, insbesondere unter 5 mm, möglich sind. "Ringförmig" meint nicht unbedingt "kreisförmig", wobei eine Kreisform nicht ausgeschlossen ist. Insbesondere ist mit "ringförmig" auch steigbügelförmig gemeint.

Die Induktionsspule ist insbesondere im Wesentlichen aus Kupfer und vorzugsweise ein Rohr, so dass Wasser oder eine andere Flüssigkeit zur Kühlung des Induktors durch die Induktionsspule geleitet werden kann.

Innerhalb der Induktionsspule weist der Induktor einen Aufnahmeraum für das Werkstück auf mit einem gedachten eingeschriebenen Zylinder. Mit einem "gedachten eingeschriebenen Zylinder" ist ein gedachter zylindrischer Körper maximalen Zylinderdurchmessers gemeint, der gerade noch in die Induktionsspule passt. Ein zylindrisches Werkstück mit diesem Durchmesser könnte zwar von der Induktionsspule umfasst werden. Um gehärtet zu werden, müsste es jedoch etwas schlanker sein, um einen elektrischen Kontakt oder Überschlag zu vermeiden. Die Zylinderlängsachse des gedachten eingeschriebenen Zylinders (im Folgenden nur "Zylinder" genannt) steht senkrecht zu einer Querschnittsebene des Aufnahmeraums.

Die Induktionsspule ist, wie bei den bekannten Induktoren für das Vorschubhärten, relativ flach, das heißt die Höhe der Induktionsspule gemessen parallel zur Zylinderlängsachse entspricht maximal dem dreifachen, insbesondere maximal dem 1,5-fachen, des Zylinderdurchmessers.

Für den Induktor kennzeichnend ist, dass die Induktionsspule den Aufnahmeraum mit zwei Schlaufen umfasst. "Zwei" meint hier stets "mindestens zwei", wo dies technisch möglich ist. Betrachtet man eine der Schlaufen, so umgreift diese jedoch nicht ringförmig das Werkstück, wie dies bekannt ist, sondern überdeckt nur jeweils einen Teil des Umfangs des Aufnahmeraums, nämlich jeweils im Wesentlichen eine Hälfte des Umfangs. Die Schlaufen weisen jeweils eine Hinführung und eine Rückführung auf, also elektrisch hintereinander angeordnete Abschnitte, die jedoch geometrisch nicht hintereinander, sondern im Wesentlichen parallel zur Zylinderlängsachse versetzt zueinander angeordnet sind. Die Bezeichnung als "Hinführung" und als "Rückführung" dient lediglich der Unterscheidung der beiden Abschnitte und bezieht sich nicht auf die Fließrichtung des induzierenden Stroms, da dieser ohnehin als Wechselstrom oszilliert. Die Hin- und Rückführungen einer Schlaufe überdecken insbesondere im Wesentlichen den gleichen Umfangsabschnitt des Aufnahmeraums. Anders ausgedrückt erstreckt sich die Induktionsspule innerhalb einer Schlaufe zunächst ein Stück weit um den Aufnahmeraum mit der Hinführung und dann parallel versetzt wieder zurück mit der Rückführung.

Der Induktor weist zwei Schlaufen auf, die jeweils im Wesentlichen eine Hälfte des Aufnahmeraums umgreifen und damit den Aufnahmeraum gemeinsam vollständig umgreifen. Die zwei Schlaufen erzeugen jeweils einen ringförmigen Wirbelstrom, der an der Außenseite des Werkstücks über den betreffenden Umfangsabschnitt hinweg fließt. Im Bereich zwischen der Hinführung und der Rückführung ist der induzierte Wirbelstrom etwa parallel zur Zylinderachse gerichtet. Bei einer Zahnstange können hierdurch Wirbelströme erzeugt werden, die senkrecht zu den Zahnflanken verlaufen, was zu einem vorteilhaften Härtebild führt.

Vorzugsweise sind die Hinführungen der zwei Schlaufen jeweils auf einer gemeinsamen ersten Seite und die Rückführungen jeweils auf einer gemeinsamen gegenüberliegenden zweiten Seite des Induktors angeordnet. Weist die Induktionsspule zwei Schlaufen auf und ist der Induktor beispielsweise so ausgerichtet, dass die Zylinderlängsachse des eingeschriebenen Zylinders vertikal steht, was einer vertikalen Werkstückanordnung entspricht, so verlaufen die beiden Hinführungen oben und die beiden Rückführungen unten beziehungsweise umgekehrt. Hierdurch wird erreicht, dass die oben erwähnten parallel zur Zylinderachse verlaufenden Wirbelstromanteile der zwei Schlaufen in die gleiche Richtung verlaufen und sich dadurch nicht stören, sondern ergänzen.

Zur Ausbildung eines starken und damit effektiven Magnetfelds schlägt die Erfindung vor, dass bei einer der Schlaufen der Abstand zwischen der Hin- und Rückführung maximal der Summe der Höhen der Hin- und Rückführung entspricht, wobei die Höhen und der Abstand jeweils parallel zur Zylinderlängsachse gemessen sind.

Wie erwähnt ist für die Ausbildung der Wirbelströme der Bereich zwischen der Hinführung und der Rückführung wichtig. Vorzugsweise ist daher bei den zwei Schlaufen jeweils die Hin- und Rückführung durch einen Verbinder verbunden. Dieser Verbinder ist bei einer Zahnstange als Werkstück insbesondere so angeordnet, dass er im Wesentlichen senkrecht zu den Zahnflanken steht. Da bei Zahnstangen häufig Schrägverzahnungen zum Einsatz kommen, schlägt die Erfindung vor, dass die Verbinder sich in einem Winkel von maximal 30 Grad zur Zylinderlängsachse erstrecken und dass die Verbinder im Wesentlichen parallel zueinander angeordnet sind.

Im Bereich der genannten Verbinder ist die Ausbildung des Magnetfelds besonders anspruchsvoll, da es zu Kompensations- und Skin-Effekten kommt. Um bei geraden Zahnflanken, die sich gegenüber der Verbinder befinden, ein möglichst günstiges Härtebild zu erreichen, schlägt die Erfindung vor, dass zueinander gewandte Enden der Verbinder der zwei Schlaufen in Richtung des Zentrums des Aufnahmeraums vorspringen, also in Richtung der Zylinderachse. Die Verbinder haben in diesem Bereich einen geringeren Koppelabstand zu geraden Zahnflanken, als dies bei ohne das Vorspringen der Fall wäre.

Die Breite der Verbinder der zwei Schlaufen, gemessen in Umfangsrichtung des Aufnahmeraums, entspricht dem 0,25-fachen bis 1,0-fachen, insbesondere dem 0,5-fachen bis 0,75-fachen, der Summe der Höhen der jeweiligen Hin- und Rückführung. Durch diese Dimensionierung wird ein besonders gleichmäßig verteilter Wirbelstrom innerhalb der Zahnflanken erreicht.

Der Abstand zwischen den beiden Verbindern beträgt vorzugsweise 1 bis 3 Millimeter, insbesondere etwa 2 mm. Ein möglichst kleiner Abstand bewirkt, dass die induzierenden Ströme der beiden Schlaufen nahe beieinander fließen, was sich günstig auf das Härtebild auswirkt. Die Einhaltung eines Mindestabstands sichert gleichzeitig, dass es nicht zu ungewollten Überschlägen zwischen den Verbindern kommt. Vorzugsweise ist ein elektrischer Isolator, beispielsweise aus Teflon, zwischen den beiden Verbindern angeordnet.

In einer Variante der Erfindung sind die Verbinder der zwei Schlaufen als gemeinsamer Leiter ausgebildet, wodurch sich ein besonders einfacher Aufbau ergibt. Entsprechend gibt es hier keinen Abstand zwischen den Verbindern. Bei dieser Variante sind die beiden Schlaufen parallel geschaltet, während sie ansonsten in Reihe geschaltet sind, das heißt die Rückführung der einen Schleife ist an die Hinführung der anderen Schleife angeschlossen.

Zur Verschiebung und Verstärkung des Magnetfelds in das Werkstück, sowie zur Vermeidung einer Selbstkompensation des Magnetfelds, schlägt die Erfindung vor, dass bei einer der Schlaufen, insbesondere bei allen beziehungsweise beiden Schlaufen, zwischen der Hin- und Rückführung ein Kern als Feldführung angeordnet ist. Die Feldführung wird hier nicht als Teil der Induktionsspule, sondern als separates Bauteil verstanden. Mit einem Kern ist ein Element aus einem weichmagnetischem Werkstoff gemeint, also insbesondere aus einem Ferrit. Als Ferrite werden magnetisierbare keramische Sinter-Werkstoffe auf Basis von Metalloxiden verstanden. Alternativ sind sogenannte Pulverkerne möglich, bei denen weichmagnetische Pulver in einer Bindermatrix gefasst sind. Als Kern können außerdem Blechpakete dienen, wie sie von Transformatoren bekannt sind.

Die Erfindung wird nachfolgend anhand zweier Ausführungsbeispiele mit Varianten erläutert. Es zeigen:
- Figur 1: eine perspektivische Darstellung des ersten Ausführungsbeispiels eines erfindungsgemäßen Induktors;
- Figur 2: eine perspektivische Darstellung der Induktionsspule desselben Induktors ohne Feldführung;
- Figur 3: eine etwas geänderte Variante des Induktors aus Figur 2 in einer Draufsicht;
- Figur 4: eine weitere, etwas geänderte Variante des Induktors aus Figur 2 in einer Schnittdarstellung gemäß Pfeilen IV aus Figur 3; und
- Figur 5: der Induktor eines zweiten Ausführungsbeispiels ohne Feldführung in perspektivischer Darstellung.

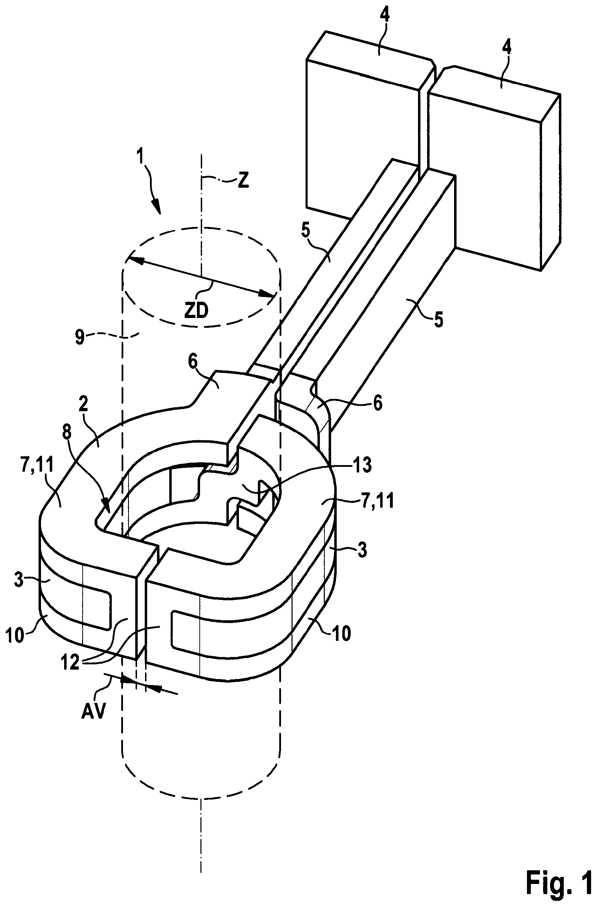

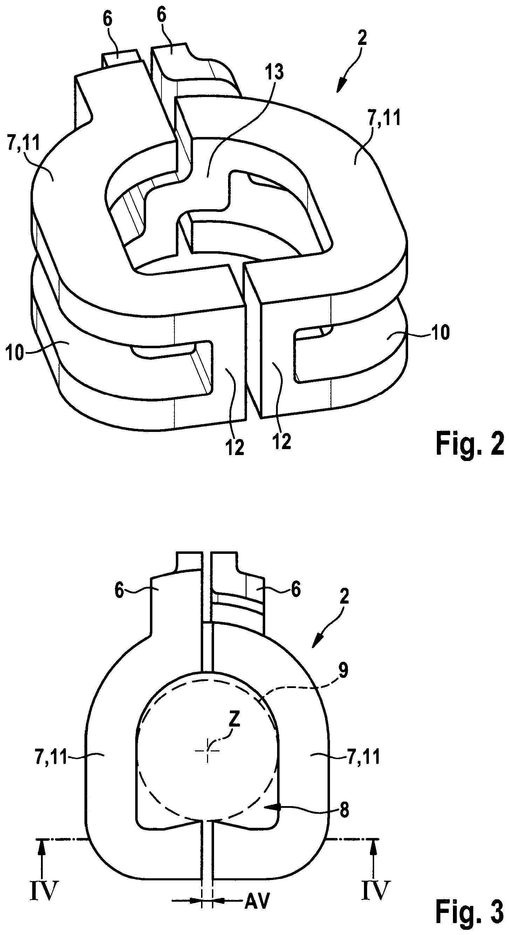

Der in Figur 1 dargestellte Induktor 1 dient dem Härten einer nicht dargestellten Zahnstange als Werkstück. Der Induktor 1 weist eine Induktionsspule 2 mit einer Feldführung 3 sowie zwei Anschlüsse 4 auf, die über Verbindungsrohre 5 mit der Induktionsspule 2 verbunden sind. Die Induktionsspule 2, die Anschlüsse 4 und die Verbindungsrohe 5 sind aus Kupfer hergestellt. Die Feldführung 3 dient als Kern und ist aus einem Ferrit hergestellt. Sie wird hier nicht als Teil der Induktionsspule 2 betrachtet. In Figur 2 ist die Induktionsspule 2 zum besseren Veranschaulichung der Geometrie ohne die Feldführung 3 dargestellt.

Die Anschlüsse 4 dienen der Kontaktierung mit einer nicht dargestellten hochfrequenten Wechselstromquelle und sind als quaderförmige Blöcke ausgeführt mit zwei Durchgangsbohrungen (verdeckt und daher nicht dargestellt) zum Anschluss von Wasser als Kühlmedium. Die Durchgangsbohrungen münden in die Verbindungsrohre 5, die einen im Wesentlichen rechteckigen Innen- und Außenquerschnitt aufweisen. Die Verbindungsrohre 5 münden induktionsspulenseitig in Übergangsstücke 6, die als Teile der Induktionsspule 2 aufgefasst werden können und die Verbindung zu je einer Schlaufe 7 der Induktionsspule 2 sowohl elektrisch also auch für das Kühlmedium herstellen.

Die beiden Schlaufen 7 umfassen und überdecken jeweils im Wesentlichen symmetrisch auf einer gegenüberliegenden Seite einen Aufnahmeraum 8 des Induktors 1. Gemeinsam bilden sie in der in Figur 3 dargestellten Draufsicht eine Steigbügelform, das heißt die Schlaufen 7 verlaufen zunächst in einem Viertelkreis von dem jeweiligen Übergangsstück 6 aus voneinander weg, dann parallel zueinander und schließlich mit einem 90-Grad-Knick aufeinander zu.

Ein gedachter, eingeschriebener Zylinder 9 mit einem Zylinderdurchmesser ZD von 32 Millimeter, erstreckt sich mit seiner Zylinderlängsachse Z senkrecht zu dieser Steigbügelform. Anders ausgedrückt umschließen die beiden Schlaufen 7 ringförmig je zur Hälfte den Umfang des Zylinders 9 und liegen an diesem an. Eine Querschnittsebene des Aufnahmeraums 8 steht senkrecht zur Zylinderlängsachse Z.

Die Schlaufen 7 weisen jeweils eine Hinführung 10 und eine Rückführung 11 auf, die durch einen Verbinder 12 verbunden sind. Die Hinführungen 10 beider Schleifen 7 erstrecken sich jeweils innerhalb einer ersten Querschnittsebene des Aufnahmeraums 8. Die Rückführungen 11 erstrecken sich in einer dazu parallelen zweiten Querschnittsebene. Anders ausgedrückt sind die Hinführungen 10 der zwei Schlaufen 7 jeweils auf einer gemeinsamen ersten Seite und die Rückführungen 11 jeweils auf einer gemeinsamen gegenüberliegenden zweiten Seite des Induktors 1 angeordnet. Die Hinführungen 10 und die Rückführungen 11 je einer Schlaufe 7 sind parallel zur Zylinderachse versetzt angeordnet. Sie sind außerdem bezüglich der in Figur 3 dargestellten Draufsicht, also in Richtung der Zylinderachse Z gesehen, im Wesentlichen deckungsgleich. Im Folgenden wird der in Figur 1 rechts dargestellte Anschluss 4 als "Eingang" und der links dargestellte Anschluss 4 als "Ausgang" bezeichnet. Ebenso wie bei den Hin- und Rückführungen 10, 11 gibt dies aufgrund der oszillierenden Spannung lediglich den Zustand einer Momentaufnahme wieder und dient somit lediglich der verständlicheren Beschreibung. Auch die Bezeichnungen "oben", "unten", "rechts" und "links" beziehen sich lediglich auf die Lage, wie sie korrespondierend in den Figuren 1, 2, 4 und 5 dargestellt ist.

In dem genannten Zustand der Momentaufnahme fließt ein Strom vom Eingang über das rechte Verbindungsrohr 5 zum rechten Übergangsstück 6, das zur rechten Schlaufe 7 führt. Das rechte Übergangsstück 6 führt dazu nach unten zu der Hinführung 10 der rechten Schlaufe 7. Bezüglich des Aufnahmeraums 8 gegenüberliegend dem Übergangsstück 6 endet die Hinführung 10 und ist über den rechten Verbinder 12, der sich parallel zur Zylinderlängsachse Z nach oben erstreckt, mit der Rückführung 11 der rechten Schlaufe 7 verbunden. Der Strom fließt über die Rückführung 11 wieder halb um den Aufnahmeraum 8 herum und wird dann von einem treppenförmigen Zwischenstück 13 nach unten und von rechts nach links zur Hinführung 10 der linken Schlaufe 7 geführt. Diese linke Hinführung 10 führt den Strom auf der linken Seite des Aufnahmeraums 8 vorbei bis zum linken Verbinder 12, der sich mit einem Abstand AV von 2 Millimetern zum rechten Verbinder 12 parallel erstreckt. Zwischen den Verbindern 12 ist, genauso wie zwischen den Verbindungsrohren 5, eine nicht dargestellte Isolierung in Form von Teflon-Scheiben angeordnet. Der linke Verbinder 12 stellt die Verbindung zwischen der Hinführung 11 und der Rückführung 11 der linken Schlaufe 7 her. Über die Rückführung 11 wird der Strom wieder zurück, halb um den Aufnahmeraum 8 herum, bis zum linken Übergangsstück 6 geleitet. Das linke Übergangsstück 6 ist mit dem linken Verbindungsrohr 5 und dieses mit dem Ausgang verbunden. Die beiden Schleifen 7 sind also in Reihe geschaltet.

Zwischen den Hinführungen 10 und den Rückführungen 11 ist von den Verbindern 12 bis fast bis zu den Übergangsstücken 6 die Feldführung 3 angeordnet. In der in Figur 3 dargestellten Draufsicht ist die Feldführung 3 deckungsgleich mit den Hin- und Rückführungen 10, 11.

Die Anordnung der Schlaufen 7 bewirkt, verstärkt durch die Feldführung 3, die Induktion je eines ringförmigen Wirbelstroms im Bereich der Oberfläche eines Werkstücks, das sich im Aufnahmeraum 8 befindet. Die ringförmigen Wirbelströme verlaufen dabei im Wesentlichen symmetrisch jeweils etwa über die Hälfte des Umfangs des Werkstücks. Die beiden ringförmigen Wirbelströme nähern oder überlappen sich im Bereich der Verbinder 12 und des Zwischenstücks 13 und verlaufen in diesen Bereichen im Wesentlichen parallel zur Zylinderlängsachse Z, während sie im Bereich der Hin- und Rückführungen 10, 11 im Wesentlichen parallel zu einer Querschnittsebene des Aufnahmeraums 8 verlaufen. Wird eine Zahnstange so durch den Aufnahmeraum 8 geführt, dass die Zähne zu den Verbindern 12 weisen und die Längsachse der Zahnstange im Wesentlichen parallel zur Zylinderlängsachse Z steht, so werden Wirbelströme induziert, die in etwa senkrecht zu den Zahnflanken und durch diese hindurch verlaufen. Hierdurch wird beim Vorschubhärten, bei dem der Induktor 1 relativ zur Zahnstange als Werkstück verfahren und dadurch sukzessiv erhitzt wird, ein besonders vorteilhaftes Härtebild erreicht.

In der in Figur 3 dargestellten Draufsicht ist insofern eine Variante des Induktors 1 aus den Figuren 1 und 2 gezeigt, als die zueinander gewandten Enden 14 der Verbinder 12 in Richtung des Zentrums des Aufnahmeraums 8 beziehungsweise in Richtung der Zylinderlängsachse Z vorspringen. Ansonsten ist der Induktor 1 unverändert. Durch das Vorspringen der zueinander gewandten Enden 14 wird ein induzierender Strom bei einer Zahnstange mit geraden Zahnflanken (nicht dargestellt) mittig mit etwas geringerem Koppelabstand geführt, was sich auf positiv auf das Härtebild auswirkt.

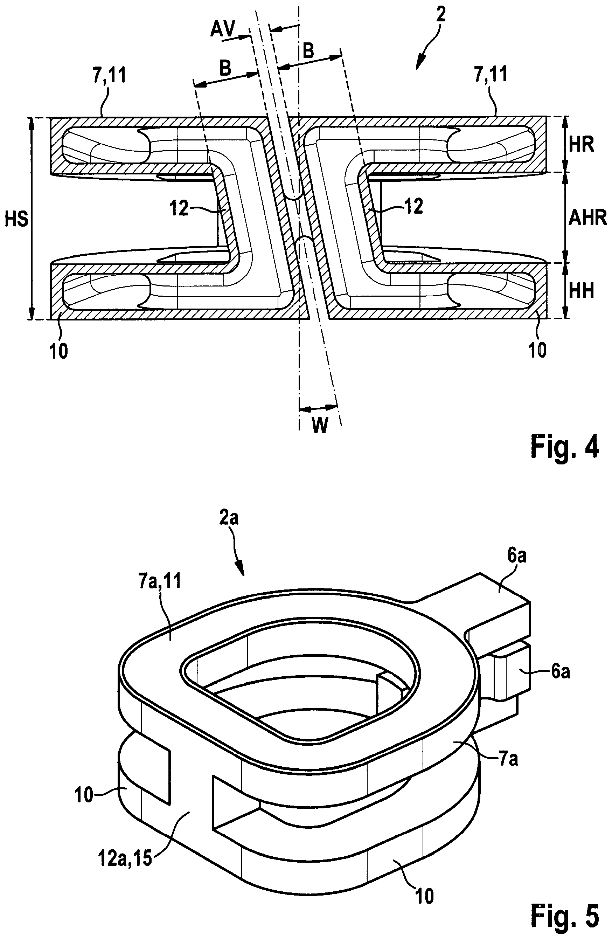

Die Darstellung in Figur 4 entspricht etwa einem Schnitt parallel zur Zylinderlängsachse Z gemäß den Pfeilen IV aus Figur 3, allerdings mit einer weiteren Variation: Die Verbinder 12 verlaufen hier nicht wie bei den anderen Figuren parallel zur Zylinderlängsachse Z sondern in einem Winkel W von etwa 10 Grad. Bei einer Zahnstange als Werkstück mit einer Schrägverzahnung, die mit 10 Grad zur Längsachse der Zahnstange verläuft, kann hierdurch erreicht werden, dass der induzierende Strom und damit der induzierte Wirbelstrom im Wesentlichen senkrecht zu den Zahnflanken verlaufen, was zu einer Optimierung des Härtebilds genutzt werden kann.

Außerdem sind in Figur 4 verschiedene Größenverhältnisse dargestellt, wie sie genauso für die Induktionsspule 2 in den Figuren 1 bis 3 gelten: Die Höhe HH der Hinführung 10 und die Höhe HR der Rückführung 11 beträgt jeweils 6 Millimeter und damit gemeinsam (HH+HR) mehr als der Abstand AHR zwischen der Hin- und Rückführung 10, 11 von 10 Millimeter. Die Gesamthöhe HS der Induktionsspule 2 beträgt damit 22 Millimeter und damit weniger als der Zylinderdurchmesser ZD. Auch die Breite B der Verbinder 12 beträgt 6 Millimeter, und entspricht somit dem 0,5-fachen der Summe der Höhen der Hinführung 10 und Rückführung 11 (HH+HR).

Wie darüber hinaus aus Figur 4 deutlich wird, ist die Induktionsspule 2 als Rohr mit einem Rechteckquerschnitt sowohl innen als auch außen ausgeführt, wobei im Inneren die Ecken abgerundet sind.

Die in Figur 5 dargestellte Induktionsspule 2a eines zweiten Ausführungsbeispiels des erfindungsgemäßen Induktors weist große Ähnlichkeiten zur Induktionsspule 2 des ersten Ausführungsbeispiels auf. Zur Vermeidung von Wiederholungen wird daher im Folgenden nur auf die Unterschiede eingegangen. Bei der Induktionsspule 2a weisen die Verbinder 12a der beiden Schlaufen 7a einen gemeinsamen Leiter 15 auf, also ein gemeinsames Rohr. Die beiden Hinführungen 10 treffen sich also bei dem gemeinsamen Leiter 15 und vom gemeinsamen Leiter gehen die beiden Rückführungen 11 wieder ab. Außerdem gehen beide Hinführungen 10 von einem gemeinsamen Übergangsstück 6a aus, das über ein nicht dargestelltes Verbindungsrohr mit dem rechten Anschluss (nicht dargestellt) verbunden ist. Genauso enden beide Rückführungen 11 in einem gemeinsamen Übergangsstück 6a, welches über ein nicht dargestelltes Verbindungsrohr mit dem linken Anschluss (nicht dargestellt) verbunden ist. Zwischen den Hin- und Rückführungen 10, 11 ist eine nicht dargestellte Feldführung angeordnet. Gegenüber dem ersten Ausführungsbeispiel, bei dem die Verbinder 12 getrennt sind, ergibt sich ein etwas einfacherer Aufbau, allerdings muss das Werkstück (nicht dargestellt) zur Ausbildung symmetrischer Wirbelströme sehr genau konzentrisch zur Zylinderlängsachse Z geführt werden. Die beiden Schleifen 7a sind im zweiten Ausführungsbeispiel parallel geschaltet.

### Bezuaszeichenliste

- 1,1a: Induktor
- 2, 2a: Induktionsspule
- 3: Feldführung
- 4: Anschluss
- 5: Verbindungsrohr
- 6, 6a: Übergangsstück
- 7, 7a: Schlaufe
- 8: Aufnahmeraum
- 9: gedachter, eingeschriebener Zylinder
- 10: Hinführung
- 11: Rückführung
- 12, 12a: Verbinder
- 13: Zwischenstück
- 14: zueinander gewandte Enden der Verbinder 12
- 15: gemeinsamer Leiter
- AHR: Abstand zwischen Hinführung 10 und Rückführung 11
- AV: Abstand zwischen den Verbindern 12
- B: Breite eines Verbinder 12
- HH: Höhe der Hinführung 10
- HR: Höhe der Rückführung 11
- HS: Höhe der Induktionsspule 2, 2a
- W: Winkel des Verbinders 12 zur Zylinderlängsachse Z
- Z: Zylinderlängsachse
- ZD: Zylinderdurchmesser

## Patentansprüche

1. Induktor zur induktiven Härtung von stabförmigen Werkstücken, insbesondere Zahnstangen, mit einer ringförmigen Induktionsspule (2, 2a) zum Umfassen des Werkstücks, wobei der Induktor (1) innerhalb der Induktionsspule (2, 2a) einen Aufnahmeraum (8) für das Werkstück aufweist mit einem gedachten eingeschriebenen Zylinder (9), dessen Umfang von der Induktionsspule (2, 2a) umfasst wird, und dessen Zylinderlängsachse (Z) senkrecht zu einer Querschnittsebene des Aufnahmeraums (8) steht, wobei die Höhe (HS) der Induktionsspule (2, 2a) gemessen parallel zur Zylinderlängsachse (Z) maximal dem dreifachen, insbesondere maximal dem 1,5-fachen, des Zylinderdurchmessers (ZD) entspricht, wobei die Induktionsspule (2, 2a) den Aufnahmeraum (8) mit zwei Schlaufen (7, 7a) umfasst, welche jeweils im Wesentlichen eine Hälfte des Umfangs des Aufnahmeraums (8) überdeckt, **dadurch gekennzeichnet dass** die Schlaufen (7) jeweils eine Hinführung (10) und eine Rückführung (11) aufweisen, die im Wesentlichen parallel zur Zylinderlängsachse (Z) versetzt angeordnet sind.

2. Induktor nach Anspruch 1, **dadurch gekennzeichnet, dass** die Hinführungen (10) der zwei Schlaufen (7, 7a) jeweils auf einer gemeinsamen ersten Seite und die Rückführungen (11) jeweils auf einer gemeinsamen gegenüberliegenden zweiten Seite des Induktors (1) angeordnet sind.

3. Induktor nach Anspruch 1 oder 2, **dadurch gekennzeichnet, dass** bei mindestens einer der Schlaufen (7, 7a) der Abstand (AHR) zwischen der Hin- und Rückführung (10, 11) maximal dem 2,0-fachen, insbesondere maximal dem 1,0-fachen, der Summe der Höhen (HH+HR) der Hin- und Rückführung (10, 11) entspricht, wobei die Höhen und der Abstand jeweils parallel zur Zylinderlängsachse (Z) gemessen sind.

4. Induktor nach einem der vorstehenden Ansprüche, **dadurch gekennzeichnet, dass** bei den zwei Schlaufen (7, 7a) jeweils die Hin- und Rückführung (10) durch einen Verbinder (12) verbunden ist, der sich in einem Winkel (W) von maximal 30 Grad zur Zylinderlängsachse (Z) erstreckt und dass die Verbinder (12) der zwei Schlaufen (7, 7a) im Wesentlichen parallel zueinander angeordnet sind.

5. Induktor nach Anspruch 4, **dadurch gekennzeichnet, dass** zueinander gewandte Enden (14) der Verbinder (12) der zwei Schlaufen (7) in Richtung des Zentrums des Aufnahmeraums (8) vorspringen.

6. Induktor nach Anspruch 4 oder 5, **dadurch gekennzeichnet, dass** die jeweilige Breite der Verbinder (BV) der zwei Schlaufen (7), gemessen in Umfangsrichtung des Aufnahmeraums (8), dem 0,25-fachen bis 1,5-fachen, insbesondere dem 0,5-fachen bis 1,0-fachen, der Summe der Höhen (HH+HR) der jeweiligen Hin- und Rückführung (10, 11) entspricht.

7. Induktor nach einem der Ansprüche 4 bis 6, **dadurch gekennzeichnet, dass** zwischen den Verbindern (12) der zwei Schlaufen (7) ein Abstand (AV) von 1 bis 3 Millimeter besteht.

8. Induktor nach einem der Ansprüche 4 bis 6, **dadurch gekennzeichnet, dass** die Verbinder (12a) der zwei Schlaufen (7a) als gemeinsamer Leiter (15) ausgebildet sind.

9. Induktor nach einem der vorstehenden Ansprüche, **dadurch gekennzeichnet, dass** bei mindestens einer der Schlaufen (7, 7a) zwischen der Hin- und Rückführung (10, 11) ein Kern als Feldführung (3) angeordnet ist.

10. Induktor nach einem der vorstehenden Ansprüche, **dadurch gekennzeichnet, dass** die Induktionsspule (2, 2a) als Rohr ausgebildet ist.

11. Verfahren zum Härten eines stabförmigen Werkstücks, insbesondere einer Zahnstange, **dadurch gekennzeichnet, dass** ein Induktor (1) nach einem der vorstehenden Ansprüche das Werkstück umfasst, zum Vorschubhärten längs des Werkstücks verfahren wird und dabei sukzessive das Werkstück erhitzt.

## Claims

1. Inductor for the inductive hardening of rod-shaped workpieces, in particular toothed racks, comprising an annular induction coil (2, 2a) for surrounding the workpiece, the inductor (1) having a receiving space (8) within the induction coil (2, 2a) for the workpiece, which space has an imaginary drawn cylinder (9), the circumference of which is surrounded by the induction coil (2, 2a) and the longitudinal axis of which (Z) is perpendicular to a cross-sectional plane of the receiving space (8), the height (HS) of the induction coil (2, 2a), measured parallel to the longitudinal cylinder axis (Z), corresponding to at most three times, in particular at most 1.5 times, the cylinder diameter (ZD), the induction coil (2, 2a) surrounding the receiving space (8) with two loops (7, 7a), which each substantially cover one half of the circumference of the receiving space (8), **characterized in that** the loops (7) each have an outward guide (10) and a return guide (11), which are offset substantially in parallel with the longitudinal cylinder axis (Z).

2. Inductor according to claim 1, **characterized in that** the outward guides (10) of the two loops (7, 7a) are each arranged on a common first side and the return guides (11) are each arranged on a common opposite second side of the inductor (1).

3. Inductor according to either claim 1 or claim 2, **characterized in that** in the case of at least one of the loops (7, 7a), the distance (AHR) between the outward and the return guide (10, 11) corresponds to at most 2.0 times, in particular at most 1.0 times, the sum of the heights (HH+HR) of the outward and the return guide (10, 11), the heights and the distance each being measured in parallel with the longitudinal cylinder axis (Z).

4. Inductor according to any of the preceding claims, **characterized in that** in the two loops (7, 7a), the outward and the return guide (10) are in each case connected by a connector (12) which extends at an angle (W) of at most 30 degrees to the longitudinal cylinder axis (Z), and **in that** the connectors (12) of the two loops (7, 7a) are arranged substantially in parallel with one another.

5. Inductor according to claim 4, **characterized in that** ends (14) of the connectors (12) of the two loops (7) that face each other project in the direction of the center of the receiving space (8).

6. Inductor according to either claim 4 or claim 5, **characterized in that** the relevant width of the connectors (BV) of the two loops (7), measured in the circumferential direction of the receiving space (8), corresponds to 0.25 times to 1.5 times, in particular 0.5 times to 1.0 times, the sum of the heights (HH+HR) of the relevant outward and return guide (10, 11).

7. Inductor according to any of claims 4 to 6, **characterized in that** there is a distance (AV) of 1 to 3 millimeters between the connectors (12) of the two loops (7).

8. The inductor according to any of claims 4 to 6, **characterized in that** the connectors (12a) of the two loops (7a) are formed as a common conductor (15).

9. Inductor according to any of the preceding claims, **characterized in that** in at least one of the loops (7, 7a), a core is arranged between the outward and the return guide (10, 11) as a field guide (3).

10. Inductor according to any of the preceding claims, **characterized in that** the induction coil (2, 2a) is designed as a tube.

11. Method for hardening a rod-like workpiece, in particular a toothed rack, **characterized in that** an inductor (1) according to any of the preceding claims surrounds the workpiece, is moved along the workpiece for advance hardening and successively heats the workpiece as a result.

## Revendications

1. Inducteur permettant le durcissement par induction de pièces à usiner en forme de tige, en particulier de crémaillères, comportant une bobine d'induction (2, 2a) annulaire destinée à entourer la pièce à usiner, l'inducteur (1) présentant, à l'intérieur de la bobine d'induction (2, 2a), un espace de réception (8) pour la pièce à usiner, lequel espace de réception comporte un cylindre (9) inscrit imaginaire dont la circonférence est entourée par la bobine d'induction (2, 2a) et dont l'axe longitudinal de cylindre (Z) est perpendiculaire à un plan de section transversale de l'espace de réception (8), la hauteur (HS) de la bobine d'induction (2, 2a), mesurée parallèlement à l'axe longitudinal de cylindre (Z), correspond au maximum à trois fois, en particulier au maximum à 1,5 fois, le diamètre de cylindre (ZD), la bobine d'induction (2, 2a) entourant l'espace de réception (8) avec deux boucles (7, 7a), lesquelles recouvrent respectivement sensiblement une moitié de la circonférence de l'espace de réception (8), **caractérisé en ce que** les boucles (7) présentent respectivement un guide d'amenée (10) et un guide de retour (11), lesquels sont décalés sensiblement parallèlement à l'axe longitudinal de cylindre (Z).

2. Inducteur selon la revendication 1, **caractérisé en ce que** les guides d'amenée (10) des deux boucles (7, 7a) sont respectivement disposés sur un premier côté commun et les guides de retour (11) sont respectivement disposés sur un second côté commun opposé de l'inducteur (1).

3. Inducteur selon la revendication 1 ou 2, **caractérisé en ce que,** pour au moins l'une des boucles (7, 7a), la distance (AHR) entre le guide d'amenée et le guide de retour (10, 11) est au maximum de 2,0 fois, en particulier au maximum de 1,0 fois, la somme des hauteurs (HH+HR) du guide d'amenée et du guide de retour (10, 11), les hauteurs et la distance étant mesurées respectivement parallèlement à l'axe longitudinal de cylindre (Z).

4. Inducteur selon l'une des revendications précédentes,
**caractérisé en ce que,** pour les deux boucles (7, 7a), respectivement le guide d'amenée et le guide de retour (10) sont connectés par un connecteur (12) qui s'étend selon un angle (W) d'au maximum 30 degrés par rapport à l'axe longitudinal de cylindre (Z), **et en ce que** les connecteurs (12) des deux boucles (7, 7a) sont disposés sensiblement parallèlement l'un à l'autre.

5. Inducteur selon la revendication 4, **caractérisé en ce que** des extrémités (14) tournées l'une vers l'autre des connecteurs (12) des deux boucles (7) font saillie en direction du centre de l'espace de réception (8).

6. Inducteur selon la revendication 4 ou 5, **caractérisé en ce que** la largeur respective des connecteurs (BV) des deux boucles (7), mesurée dans la direction circonférentielle de l'espace de réception (8), correspond à 0,25 fois à 1,5 fois, en particulier à 0,5 fois à 1,0 fois, la somme des hauteurs (HH+HR) du guide d'amenée et du guide de retour (10, 11) respectifs.

7. Inducteur selon l'une des revendications 4 à 6, **caractérisé en ce qu'**une distance (AV) de 1 à 3 millimètres existe entre les connecteurs (12) des deux boucles (7).

8. Inducteur selon l'une des revendications 4 à 6, **caractérisé en ce que** les connecteurs (12a) des deux boucles (7a) sont réalisés sous la forme d'un conducteur commun (15).

9. Inducteur selon l'une des revendications précédentes,
**caractérisé en ce que,** pour au moins l'une des boucles (7, 7a), un noyau servant de guide de champ (3) est disposé entre le guide d'amenée et le guide de retour (10, 11).

10. Inducteur selon l'une des revendications précédentes,
**caractérisé en ce que** la bobine d'induction (2, 2a) est réalisée sous la forme d'un tube.

11. Procédé permettant le durcissement d'une pièce à usiner en forme de tige, en particulier d'une crémaillère, **caractérisé en ce qu'**un inducteur (1) selon l'une des revendications précédentes entoure la pièce à usiner, est déplacé le long de la pièce à usiner pour le durcissement par avance, et chauffe en même temps progressivement la pièce à usiner.
